(19) Europäisches Patentamt
European Patent Office
Office européen des brevets

(11) **EP 1 258 459 B1**

(12) **EUROPÄISCHE PATENTSCHRIFT**

(45) Veröffentlichungstag und Bekanntmachung des Hinweises auf die Patenterteilung:
**23.06.2004 Patentblatt 2004/26**

(51) Int Cl.⁷: **C02F 1/76**

(21) Anmeldenummer: **01111856.9**

(22) Anmeldetag: **16.05.2001**

(54) **Verfahren und Vorrichtung zur Entfernung von Bromid aus Wasser**

Process and device for the elimination of bromide from water

Procédé et appareil d'élimination de bromures dans l'eau

(84) Benannte Vertragsstaaten:
**AT BE CH CY DE DK ES FI FR GB GR IE IT LI LU MC NL PT SE TR**

(43) Veröffentlichungstag der Anmeldung:
**20.11.2002 Patentblatt 2002/47**

(73) Patentinhaber: **VA TECH WABAG Deutschland GmbH & Co. KG**
**85737 Ismaning (DE)**

(72) Erfinder:
• **Eichelsdörfer, Dieter, Dr.**
  **80687 München (DE)**
• **Hagen, Klaus, Dr.**
  **95326 Kulmbach (DE)**
• **Reis, Michael**
  **95326 Kulmbach (DE)**

(74) Vertreter: **VA TECH Patente GmbH & Co**
**Penzinger Strasse 76**
**1141 Wien (AT)**

(56) Entgegenhaltungen:
DE-A- 3 914 024          DE-A- 19 724 547
DE-A- 19 830 310         GB-A- 2 283 484

• **DATABASE WPI Section Ch, Week 199228 Derwent Publications Ltd., London, GB; Class D15, AN 1992-232540 XP002180505 & SU 1 682 320 A (NOVCH POLY), 7. Oktober 1991 (1991-10-07)**

**Beschreibung**

Verfahren zur Entfernung von Bromid aus Füllwasser für Schwimm- und Badebeckenanlagen oder aus Rohwasser für die Trinkwasseraufbereitung, wenn das Füll- oder Rohwasser von Natur aus eine ungenügende Konzentration an reaktionsfähigen organischen Stoffen besitzt.

Bromid-Ionen $Br^-$, letztere im Folgenden kurz Bromid genannt, reagieren in Bade- oder Trinkwasser bevorzugt mit Oxidationsmitteln wie Chlor und Hypochloriten, Chlordioxid, Ozon, Wasserstoffperoxid, etc. zu Brom bzw. Hypobromiger Säure (letztere im Folgenden Brom genannt). Brom wiederum kann mit organischen Wasserinhaltsstoffen (Präkursoren) zu gesundheitlich bedenklichem Bromoform ($CHBr_3$) und/oder bei Anwesenheit von Chlor, zu bromhaltigen halogen-organischen Verbindungen wie Dibromchlormethan ($CHBr_2Cl$), Bromdichlormethan ($CHBrCl_2$) und anderen bromhaltigen halogen-organischen Verbindungen weiter reagieren.

Aus Bromiden können z.B. in Verbindung mit Ozon Bromate (Salze der Bromsäure $HBrO_3$) entstehen, die als kanzerogen eingestuft werden. Für Bromat ist im Trinkwasser ein gesetzlich verbindlicher Grenzwert festgelegt.

Um die Bildung von Brom durch Oxidation von Bromid und in der Folge bromorganischen Verbindungen zu verhindern, kann die Entfernung von Bromid aus Füllwasser für Schwimmbäder oder Trinkwasser durch Vollentsalzung erfolgen. Diese hat jedoch den Nachteil, dass eine gezielte Bromidentfernung nicht möglich ist.

Es ist daher eine Aufgabe der Erfindung, ein Verfahren zur Verfügung zu stellen, welches zur gezielten Entfernung von Bromid aus Wasser geeignet ist.

Die gestellte Aufgabe wird durch das Verfahren gemäß Anspruch 1 gelöst. Ausgestaltungen des Verfahrens sind in den abhängigen Ansprüchen 2 bis 8, eine entsprechende Vorrichtung ist in Anspruch 9 angegeben.

Durch die Umsetzung von Bromid mittels eines Oxidationsmittels zu Brom wird sichergestellt, dass für die folgenden Reaktionen das Bromid weitgehend zu Brom oxidiert wurde.

Durch die Reaktion des Broms mit gezielt zugesetzten organischen Verbindungen (Präkursoren) wird das Bromid in eine adsorbierbare, abfiltrierbare, ausblasbare oder für eine andere Trennmethode geeignete Form übergeführt.

Als organische Verbindungen (Präkursoren) können Alkohole, Kohlenwasserstoffe, Ketone, Aldehyde oder Ether verwendet werden. Weiterhin können etwa auch huminstoffhaltige Wässer verwendet werden.

Möglich ist es, etwa bei der Aufbereitung von Füllwasser für Schwimm- und Badebeckenanlagen, dass die organischen Verbindungen durch Rückführen zumindest eines Teils des gebrauchten Badewassers, welches durch den Gebrauch mit organischen Verbindungen angereichert wurde, zugegeben werden.

Durch gezielte Einstellung des pH-Wertes mit Säuren bzw. Laugen wird die Reaktion zwischen Brom und den organischen Verbindungen in die gewünschte Richtung und mit der gewünschten Reaktionsgeschwindigkeit erzielt. Diese Einstellung ist klarerweise nur notwendig, wenn der vorhandene pH-Wert vom für die Reaktion optimalen pH-Wert abweicht.

Die Entfernung der gebildeten halogen-organischen, insbesondere-bromorganischen Verbindungen kann mittels Adsorption unter Verwendung von z. B. Kornaktivkohle, mittels Adsorption unter Verwendung von z.B. Pulveraktivkohle, Bentonit oder Kieselgur und nachgeschalteter Filtration oder mittels adsorptiv arbeitender Ionenaustauscher durchgeführt werden.

Das Verfahren soll anhand eines Beispiels näher beschrieben werden:

Bromid wird mit Chlor zu Brom und Chlorid umgesetzt:

$$2Br^- + Cl_2 \rightarrow Br_2 + 2Cl^-$$

Für diese Reaktion kann das dem Badewasser in Schwimm- oder Badebeckenanlagen oder das gegebenenfalls dem Trinkwasser zu Zwecken der Desinfektion zugesetzte Chlor verwendet werden.

Anschließend wird das Brom mit zudosiertem Ethanol zur Reaktion gebracht:

$$C_2H_5OH + Br_2 \rightarrow CH_3CHO + 2\ HBr$$

Die Reaktionsprodukte reagieren mit weiterem verfügbaren Brom zu $CBr_3CHO$ und weiters durch Zugabe von Lauge ($OH^-$) zu Bromoform $CHBr_3$:

$$CH_3CHO + 3\ Br_2 \rightarrow CBr_3CHO + 3\ HBr$$

$$CBr_3CHO + OH^- \rightarrow CHBr_3 + HCOO^-$$

Das erfindungsgemäße Verfahren wird durchgeführt, bevor das Wasser als Füllwasser für Schwimm- und Badebeckenanlagen oder bevor das Rohwasser der Aufbereitung zu Trinkwasser zugeführt wird. Dadurch wird das Bromid vor der Zuführung des Füllwassers zum Badewasseraufbereitungskreislauf bzw. vor der Weiterleitung des Rohwassers zur Trinkwasseraufbereitung abgeschieden und damit eine unkontrollierte Reaktion von Brom bzw. Bromid und die Bildung bromhaltiger halogen-organischer Verbindungen in weiteren oxidativen Aufbereitungsstufen weitgehend vermieden.

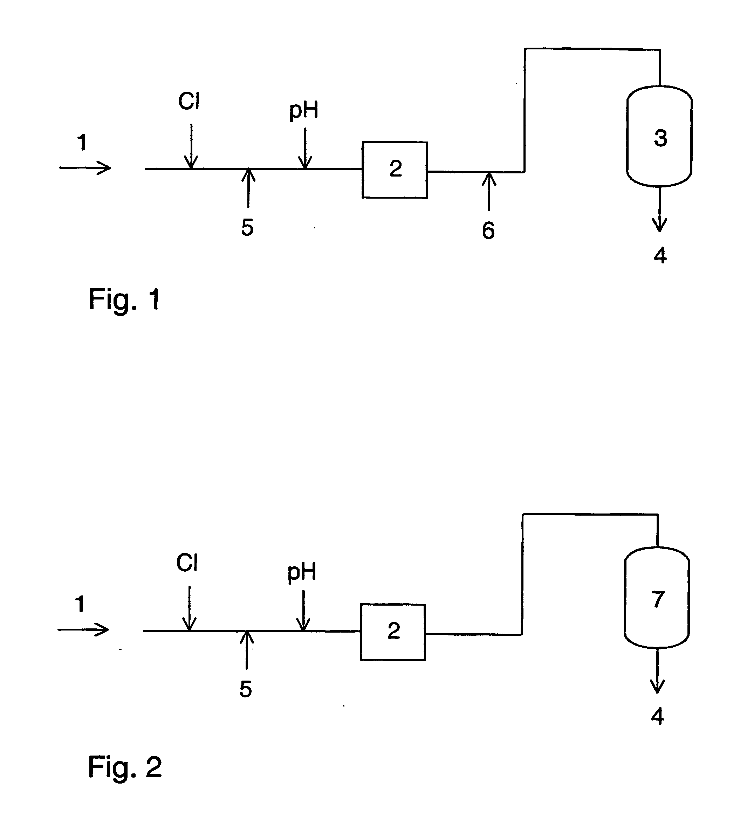

Eine Vorrichtung zur Durchführung des erfindungsgemäßen Verfahrens ist beispielhaft und schematisch in den Figuren 1 und 2 dargestellt.

In Fig. 1 ist eine erfindungsgemäße Vorrichtung mit Zuführung von Pulveraktivkohle und anschließender Filterung dargestellt.

In Fig. 2 ist eine erfindungsgemäße Vorrichtung mit einem Aktivkohlefilter dargestellt.

In Fig. 1 wird dem Rohwasser 1 mittels einer geeigneten Zugabevorrichtung das Oxidationsmittel Chlor (Bezugszeichen Cl) zugegeben, anschließend werden die organischen Verbindungen mittels Zugabeeinrichtung 5 zugesetzt. Die Reihenfolge der Zugabe von Oxidationsmittel und organischen Verbindungen kann auch umgekehrt sein oder die Zugabe kann auch gleichzeitig erfolgen. Zur Regelung der Zugabe können Parameter wie Menge, DOC, Redoxpotential, pH-Wert, etc. herangezogen werden.

Falls der sich einstellende pH-Wert nicht dem gewünschten pH-Wert bezüglich Reaktionsrichtung und Reaktionsgeschwindigkeit entspricht, muss durch eine Einrichtung zur pH-Werteinstellung (Bezugszeichen pH) Säure oder Lauge zugegeben werden. Die erfindungsgemäßen chemischen Reaktionen finden in einem Reaktionsraum 2 statt. Insofern kann gegebenenfalls die Zugabe von Säure oder Lauge auch direkt in den Reaktionsraum 2 erfolgen. Dem Reaktionsraum 2 ist eine Einrichtung 6 zur Zugabe von Pulveraktivkohle nachgeordnet, wobei die Pulveraktivkohle mit den adsorbierten bromorganischen Verbindungen in einem Filter 3 abfiltriert wird, sodass dem Ablauf des Filters 3 das bromidreduzierte Reinwasser 4 entnommen werden kann.

Das in Fig. 2 dargestellte Schema einer erfindungsgemäßen Vorrichtung unterscheidet sich von Fig. 1 darin, dass nach dem Reaktionsraum 2 lediglich ein Aktivkohlefilter 7, der etwa Kornaktivkohle enthält, zur Adsorption der halogen-organischen, insbesondere bromorganischen Verbindungen vorgesehen ist.

Mit dem erfindungsgemäßen Verfahren werden nicht nur die gebildeten bromorganischen Verbindungen, sondern auch andere halogen-organische Verbindungen abgeschieden, die in Zusammenhang mit der Anwesenheit von Brom bzw. Bromid stehen, so etwa $CHCl_3$ und andere bromhaltige Trihalogenmethane.

**Patentansprüche**

1. Verfahren zur Entfernung von Bromid aus Füllwasser für Schwimm- und Badebeckenanlagen oder aus Rohwasser für die Trinkwasseraufbereitung, **dadurch gekennzeichnet,**

   **dass** im Füll- oder Rohwasser vorhandenes Bromid mittels eines Oxidationsmittels zu Brom umgesetzt wird,
   **dass** dem Füll- oder Rohwasser gezielt definierte organische Verbindungen zudosiert werden, welche mit Brom zur Reaktion gebracht werden und
   **dass** die dabei entstehenden halogen-organischen Verbindungen aus dem Füll- oder Rohwasser entfernt werden.

2. Verfahren nach Anspruch 1, **dadurch gekennzeichnet, dass** zur Reaktion mit Brom befähigte organische Verbindungen, wie Alkohole, Kohlenwasserstoffe, Ketone, Aldehyde, Ether oder Huminstoffe, verwendet werden.

3. Verfahren nach Anspruch 1, **dadurch gekennzeichnet, dass** die organischen Verbindungen durch Rückführen zumindest eines Teils des gebrauchten Badewassers, welches durch den Gebrauch mit organischen Verbindungen angereichert wurde, zugegeben werden.

4. Verfahren nach Anspruch 1, **dadurch gekennzeichnet, dass** die halogen-organischen Verbindungen durch Adsorption aus dem Wasser entfernt werden.

5. Verfahren nach Anspruch 1, **dadurch gekennzeichnet, dass** die halogen-organischen Verbindungen durch Strippung aus dem Wasser entfernt werden.

6. Verfahren nach Anspruch 1, **dadurch gekennzeichnet, dass** die halogen-organischen Verbindungen durch Filtration, wie Umkehrosmose, aus dem Wasser entfernt werden.

7. Verfahren nach Anspruch 1, **dadurch gekennzeichnet, dass** die halogen-organischen Verbindungen mittels Ionenaustausch aus dem Wasser entfernt werden.

8. Verfahren nach Anspruch 1, **dadurch gekennzeichnet, dass** die Reaktion durch pH-Werteinstellung gesteuert wird.

9. Vorrichtung zur Entfernung von Bromid aus Füllwasser für Schwimm- und Badebeckenanlagen oder aus Rohwasser für die Trinkwasseraufbereitung, **dadurch gekennzeichnet,**
   **dass** folgende Einrichtungen umfasst sind:

   eine Einrichtung (Cl), mit welcher dem Füll- oder Rohwasser ein Oxidationsmittel zur gezielten Umsetzung von Bromid zu Brom zugebbar ist,
   eine Einrichtung (5), mit welcher dem Wasser organische Verbindungen zugebbar sind,
   eine Einrichtung (pH), mit welcher der pH-Wert durch Zugabe von Säure oder Lauge geregelt wird.
   ein Reaktionsraum (2) für die Reaktion des Bromids bzw. Broms mit den organischen Verbindungen

sowie eine Einrichtung (6, 3) zum Entfernen der entstehenden halogen-organischen Verbindungen.

**Claims**

1. Process for the removal of bromide from water for filling swimming and bathing pools or from untreated water for drinking water treatment, **characterised in that**
bromide present in the water used for filling or in the untreated water is reacted by means of an oxidising agent to form bromine,
**in that** specific organic compounds are metered in a targeted manner into the water used for filling or into the untreated water, which organic compounds are reacted with bromine,
and **in that** the organohalogen compounds formed thereby are removed from the water used for filling or from the untreated water.

2. Process according to claim 1, **characterised in that** organic compounds capable of reaction with bromine, such as alcohols, hydrocarbons, ketones, aldehydes, ethers or humic substances, are used.

3. Process according to claim 1, **characterised in that** the organic compounds are added by feeding back at least some of the used bathing water, which has been enriched with organic compounds through use.

4. Process according to claim 1, **characterised in that** the organohalogen compounds are removed from the water by adsorption.

5. Process according to claim 1, **characterised in that** the organohalogen compounds are removed from the water by stripping.

6. Process according to claim 1, **characterised in that** the organohalogen compounds are removed from the water by filtration, such as reverse osmosis.

7. Process according to claim 1, **characterised in that** the organohalogen compounds are removed from the water by means of ion exchange.

8. Process according to claim 1, **characterised in that** the reaction is controlled by adjusting the pH value.

9. Apparatus for removing bromide from water for filling swimming and bathing pools or from untreated water for drinking water treatment, **characterised in that** it comprises the following devices:
a device (Cl) with which an oxidising agent for the targeted reaction of bromide to bromine can be added to the water used for filling or to the untreated water,
a device (5) with which organic compounds can be added to the water,
a device (pH) with which the pH value can be regulated by addition of acid or lye,
a reaction chamber (2) for the reaction of the bromide or bromine with the organic compounds, and a device (6, 3) for removing the resulting organohalogen compounds.

**Revendications**

1. Procédé d'élimination des bromures contenus dans l'eau utilisée pour le remplissage de piscines ou l'alimentation d'installations de bains ou encore de l'eau brute destinée à être transformée en eau potable, **caractérisé en ce que**
les bromures présents dans l'eau de remplissage ou dans l'eau brute sont transformés en brome à l'aide d'un agent oxydant,
que des composés organiques définis spécifiques sont ajoutés de manière dosée à l'eau de remplissaae ou à l'eau brute, qui réagissent avec le brome et que les composés organiques halogénés ainsi produits sont éliminés de l'eau de remplissage ou de l'eau brute.

2. Procédé selon la revendication 1, **caractérisé en ce que**, pour effectuer la réaction avec le brome, on peut utiliser des composés organiques tels qu'un alcool, un hydrocarbure, une cétone, un aldéhyde, un éther ou de l'humine.

3. Procédé selon la revendication 1, **caractérisé en ce que** les composés organiques sont apportés par un recyclage d'au moins une partie de l'eau des bains utilisée, laquelle a été enrichie par des composés organiques du fait de son utilisation.

4. Procédé selon la revendication 1, **caractérisé en ce que** les composés organiques halogénés sont éliminés de l'eau par adsorption.

5. Procédé selon la revendication 1, **caractérisé en ce que** les composés organiques halogénés sont éliminés de l'eau par un stripping.

6. Procédé selon la revendication 1, **caractérisé en ce que** les composés organiques halogénés sont éliminés de l'eau par une filtration, par exemple par osmose inverse.

7. Procédé selon la revendication 1, **caractérisé en ce que** les composés organiques halogénés sont éliminés de l'eau au moyen d'un échange d'ions.

8. Procédé selon la revendication 1, **caractérisé en ce que** la réaction est contrôlée par un réglage de la valeur du pH.

9. Appareil d'élimination des bromures de l'éau utilisée pour le remplissage de piscines ou dans des installations de bains ou encore de l'eau brute destinée à être transformée en eau potable, **caractérisé en ce que** :

   cet appareil comprend les installations suivantes :

   une installation (Cl) permettant d'ajouter à l'eau de remplissage ou à de l'eau brute un agent oxydant pour assurer une conversion ciblée des bromures en brome,
   une installation (5) permettant d'ajouter à l'eau des composés organiques,
   une installation (pH) avec laquelle la valeur du pH est ajustée par l'addition d'un acide ou d'une base
   un compartiment de réaction (2) pour assurer la réaction des bromures ou du brome avec les composés organiques,
   ainsi qu'une installation (6, 3) pour éliminer les composés organiques halogénés formés.

Fig. 1

Fig. 2